# EUROPÄISCHE PATENTSCHRIFT

(11) **EP 3 164 301 B1**
(45) Veröffentlichungstag und Bekanntmachung des Hinweises auf die Patenterteilung: **07.03.2018**
(21) Anmeldenummer: 15794826.6
(22) Anmeldetag: 13.11.2015
(51) Int. Cl.: B60R 16/023

(54) **VERFAHREN ZUM BETREIBEN EINES INFOTAINMENTSYSTEMS, INFOTAINMENTSYSTEM UND FAHRZEUG**
METHOD FOR OPERATING AN INFOTAINMENT SYSTEM, INFOTAINMENT SYSTEM AND VEHICLE
PROCÉDÉ DE FONCTIONNEMENT D'UN SYSTÈME D'INFO-DIVERTISSEMENT, SYSTÈME D'INFO-DIVERTISSEMENT ET VÉHICULE

(30) Priorität: 22.12.2014 DE 102014019435
(43) Veröffentlichungstag der Anmeldung: 10.05.2017
(73) Patentinhaber: Audi AG, 85045 Ingolstadt (DE)
(72) Erfinder: DALKE, Christoph, 85110 Kipfenberg (DE)
(86) Internationale Anmeldenummer: PCT/EP2015/002272
(87) Internationale Veröffentlichungsnummer: WO 2016/102035

(56) Entgegenhaltungen:
- DE-B3-102012 014 724

## Beschreibung

Die vorliegende Erfindung betrifft ein Verfahren zum Betreiben eines Infotainmentsystems, das folgende Schritte aufweist. In einem ersten Schritt wird das Infotainmentsystems in einem ersten Betriebszustand betrieben. In einem zweiten Schritt wird das Infotainmentsystem in einem ersten Energiesparzustand betrieben, in dem eine mittlere Leistungsaufnahme des Infotainmentsystems niedriger ist als in dem ersten Betriebszustand. In einem weiteren Schritt wird das Infotainmentsystem in einen zweiten Energiesparzustand versetzt, in dem eine mittlere Leistungsaufnahme des Infotainmentsystems niedriger ist als in dem ersten Energiesparzustand.

Außerdem betrifft die Erfindung ein Infotainmentsystem, das dazu vorbereitet ist, dieses Verfahren durchzuführen.

Darüberhinaus betrifft die Erfindung ein Fahrzeug, das so ein Infotainmentsystem aufweist und/oder dazu vorbereitet ist, ein Infotainmentsystem nach diesem Verfahren zu betreiben. Das Fahrzeug kann beispielsweise ein Landfahrzeug, ein Luftfahrzeug, ein Schiff, ein Personenkraftwagen, ein Lastkraftwagen, ein Bus, eine landwirtschaftliche Maschine oder eine Baumaschine sein.

Bei aktiver Routenführung bleiben aktuelle Infotainmentsystem für eine vorgegebene Nachlaufzeit (von beispielsweise 15 Minuten) nach einem Abstellen eines Fahrzeugs noch in einem stromoptimierten Nachlaufzustand. Benutzt ein Fahrzeugnutzer innerhalb dieser Nachlaufzeit (Zeitspanne) den Fahrzeugschlüssel zum Öffnen einer der Fahrzeugtüren oder zum Einschalten der Zündung, müssen nur noch Teile des Infotainmentsystems gestartet werden. Nach dem Benutzen des Fahrzeugschlüssels wird beispielsweise sofort eine Navigationskarte angezeigt und der Fahrzeugnutzer kann sofort ein neues Ziel eingeben. Bei diesem Ablauf ist das Infotainmentsystem innerhalb von etwa vier Sekunden vollständig hochgefahren und bietet dem Nutzer ab diesem Zeitpunkt seinen Funktionsumfang uneingeschränkt. Benutzt der Fahrzeugnutzer jedoch erst außerhalb der Nachlaufzeit den Fahrzeugschlüssel zum Öffnen einer der Fahrzeugtüren oder zum Einschalten der Zündung, befindet sich das Infotainmentsystem bereits im Tiefschlaf und muss aus dem Tiefschlafzustand vollständig hochgefahren werden. Bis zur Verfügbarkeit des vollständigen Funktionsumfangs werden dann etwa 60 bis 80 Sekunden benötigt. Da es häufig vorkommt, dass der Fahrzeugnutzer erst nach der Nachlaufzeit zum Fahrzeug zurückkehrt und den Fahrzeugschlüssel benutzt, muss er häufig 60 bis 80 Sekunden auf eine vollständige Verfügbarkeit des Infotainmentsystems warten.

Aus dem Dokument DE 10 2012 014724 B3 ist ein Verfahren zum Betreiben eines Infotainmentsystems bekannt.

Es ist eine Aufgabe der vorliegenden Erfindung, einen Nutzungskomfort des Infotainmentsystems zu verbessern, indem dem Fahrzeugnutzer bei Rückkehr nach der Nachlaufzeit die Wartezeit auf eine vollständige Verfügbarkeit des Infotainmentsystem verkürzt wird. Aus Kosten- und Zulassungsgründen kann dieses Problem (zumindest heute noch) nicht ohne Weiteres durch eine Verlängerung der möglichen Nachlaufzeit überwunden werden. Bei aktuellem Batteriebudget und um vorrangig Startfähigkeit des Fahrzeugs sicherzustellen, beträgt die maximal mögliche Nachlaufzeit im Suspend-to-RAM-Zustand (ersten Energiesparzustand) beispielsweise acht Stunden.

Die Aufgabe, einen Nutzungskomfort des Infotainmentsystems zu verbessern, wird erfindungsgemäß durch ein Verfahren nach Patentanspruch 1, ein Infotainmentsystem nach Patentanspruch 9 und ein Fahrzeug nach Patentanspruch 10 gelöst.

Das erfindungsgemäße Verfahren zum Betreiben eines Infotainmentsystems weist folgende Schritte auf. In einem ersten Schritt wird das Infotainmentsystems in einem ersten Betriebszustand betrieben. In einem zweiten Schritt wird das Infotainmentsystems in einem ersten Energiesparzustand betrieben, in dem eine mittlere Leistungsaufnahme des Infotainmentsystems niedriger ist als in dem ersten Betriebszustand. In einem dritten Schritt wird ein Timer zum Aufwecken einer Betriebszustandsverwaltung des Infotainmentsystems zu einer Aufweckzeit gestellt. In einem vierten Schritt wird das Infotainmentsystems in einen zweiten Energiesparzustand versetzt, in dem eine mittlere Leistungsaufnahme des Infotainmentsystems niedriger ist als in dem ersten Energiesparzustand. In einem fünften Schritt wird die Betriebszustandsverwaltung des Infotainmentsystems zur Aufweckzeit mittels des Timers aufgeweckt. In einem sechsten Schritt wird das Infotainmentsystem in dem ersten Energiesparzustand betrieben. Der dritte Schritt kann auch vor dem zweiten oder sogar vor dem ersten Schritt stattfinden.

Entsprechend wird ein Infotainmentsystem vorgeschlagen, das dazu vorbereitet ist, gemäß dem erfindungsgemäßen Verfahren betrieben zu werden.

Außerdem wird ein Fahrzeug bereitgestellt, das ein erfindungsgemäßes Infotainmentsystem aufweist und/oder das dazu vorbereitet ist, ein Infotainmentsystem nach dem erfindungsgemäßen Verfahren zu betreiben.

Ein Konzept der Erfindung kann darin gesehen werden, dass die maximal mögliche Nachlaufzeit auf eine (verkürzte) Nachlaufzeit (erste Betriebsphase) im ersten Energiesparzustand und eine zweite Betriebsphase im ersten Energiesparzustand aufgeteilt wird. Dabei kann die Dauer der (verkürzten) Nachlaufzeit beispielsweise zwei Stunden betragen und die Dauer der zweiten Betriebsphase mit dem ersten Energiesparzustand beispielsweise drei bis vier Stunden betragen. Durch die zeitliche Aufteilung der maximal möglichen Nachlaufzeit im ersten Energiesparzustand wird für den Fahrzeugnutzer eine Wahrscheinlichkeit für schnelle vollständige Verfügbarkeit des Infotainmentsystems erhöht, also eine mittlere Wartezeit auf eine schnelle vollständige Verfügbarkeit des Infotainmentsystems verkleinert. Durch die im Mittel schnellere Verfügbarkeit des Infotainmentsystems wird ein Nutzerkomfort verbessert, ohne dass dafür im Fahrzeug ein größerer Energiespeicher (Fahrzeugbatterie) verbaut werden muss (welches erhebliche Gewichts- und Kostennachteile hätte).

Das Konzept der Erfindung kann auch mehrstufig realisiert werden. Insbesondere können mehr als zwei Energiesparzustände vorgesehen sein, in denen das Infotainmentsystem zueinander unterschiedliche mittleren Leistungsaufnahmen aufweist. Beispielsweise können sich die verschiedenen Energiesparzustände durch eine Auswahl von vorübergehend deaktivierbaren Komponenten oder Betriebsmodi des Infotainmentsystems unterscheiden, die in dem jeweiligen Energiesparzustand aktiv sind. Vorübergehend deaktivierbare Komponenten können beispielsweise einzelne Prozessorkerne und/oder Peripherieeinheiten (beispielsweise Display, Schnittstellen, Laufwerke) sein.

Eine bevorzugte Ausführungsform sieht vor, dass die Aufweckzeit unter Berücksichtigung eines Nutzungsverhaltens ermittelt wird, das vor dem ersten Betreiben stattgefunden hat. Durch Anpassen der Aufweckzeit an ein Nutzerverhalten kann eine mittlere Wartezeit auf eine vollständige Verfügbarkeit des Infotainmentsystem noch weiter verkleinert werden. Eine bevorzugte Weiterbildung sieht vor, dass das Nutzungsverhalten fahrzeugnutzerspezifisch und/oder abstellortspezifisch ermittelt wird. Auch hierdurch kann mittlere Wartezeit auf eine vollständige Verfügbarkeit des Infotainmentsystem optimiert, also verkleinert, werden. Denn je nach individuellem Tagesablauf können verschiedene Fahrzeugnutzer (Mitnutzer des Fahrzeugs) sich durch sehr unterschiedliche Fahrzeugnutzungsprofile auszeichnen, die sich sowohl hinsichtlich Nutzungszeiten als auch hinsichtlich Abstellort unterscheiden. Unter Abstellort werden hier geographische Orte (beispielsweise Parkbuchten, Parkplätze, Parkhäuser und Tiefgaragen) verstanden, an denen das Fahrzeug abgestellt wird.

Zweckmäßig kann sein, wenn die Aufweckzeit unter Berücksichtigung eines Eintrags erfolgt, der in einem elektronischen Kalender eines Fahrzeugnutzers oder des Fahrzeugs enthalten ist. Hierdurch kann nicht nur eine nutzer- oder abstellortspezifische Anpassung der Aufweckzeit an ein Nutzerverhalten erfolgen, sondern es ist damit sogar eine situationsspezifische Optimierung der Zeiträume möglich, während derer das Infotainmentsystem im ersten Energiesparzustand gehalten wird.

Von besonderem Vorteil ist es, wenn eine Nachlaufzeit des ersten Betreibens des Infotainmentsystems im ersten Energiesparzustand unter Berücksichtigung einer Restladung eines elektrischen Energiespeichers ermittelt wird. Vorteilhaft kann sein, wenn bei einem hohen Ladezustand des Energiespeichers eine längere Nachlaufzeit gewählt wird, während bei niedrigem Ladezustand des Energiespeichers eine kürzere Nachlaufzeit gewählt wird. Beispielsweise kann es zweckmäßig sein, für das erste und zweite Betreiben des Infotainmentsystems in dem ersten Energiesparzustand eine Gesamtzeit zu ermitteln, die beide Betriebsphasen mit dem ersten Energiesparzustand umfasst, und deren Gesamtlänge von der Größe der Restladung des elektrischen Energiespeichers abhängt. Zur Vereinfachung kann das Infotainmentsystem dann für die Aufteilung der ermittelten Gesamtzeit auf die beiden Betriebsphasen mit dem ersten Energiesparzustand beispielsweise ein konstantes Aufteilungsverhältnis anwenden.

Auch hat es Vorteile, wenn die Länge der maximalen Zeitdauer des zweiten Betreibens des Infotainmentsystems im ersten Energiesparzustand unter Berücksichtigung einer Restladung eines elektrischen Energiespeichers ermittelt wird. Vorteilhaft kann sein, wenn bei einem hohen Ladezustand des Energiespeichers das Infotainmentsystem beim zweiten Betreiben des Infotainmentsystems im ersten Energiesparzustand für eine längere Zeit im ersten Energiesparzustand betrieben wird, während es bei niedrigem Ladezustand des Energiespeichers für eine kürzere Zeit im ersten Energiesparzustand betrieben wird.

Zweckmäßig ist auch, wenn das Infotainmentsystem aus dem ersten Energiesparzustand in den ersten Betriebszustand versetzt wird, sobald von einem Fahrzeug, in dem das Infotainmentsystem angeordnet ist, eine Fahrzeugtür oder Kofferraumklappe geöffnet wird. So kann das Überführen des Infotainmentsystems in den ersten Betriebszustand zeitlich vorverlegt werden, so dass es sich bereits im ersten Betriebszustand befindet, wenn der Fahrzeugnutzer den Fahrzeugschlüssel benutzt. Insbesondere ist es von Vorteil, wenn das Infotainmentsystem nach einer vorgebenen Zeitdauer des zweiten Betreibens des Infotainmentsystems im ersten Energiesparzustand in den Tiefschlafzustand versetzt wird. Hierdurch kann sichergestellt werden, dass das Infosystem nicht auf einen geschützten Restladungsbetrag im Energiespeicher zugreift. Dieses Merkmal kann beispielsweise in denjenigen Fällen zum Wahren einer Startfähigkeit des Fahrzeugs geboten sein, wenn zum Starten des Fahrzeugs der Energiespeicher eine Mindestladung aufweisen muss. In heutigen Fahrzeugen ist zur Aktivierung des Infotainmentsystems häufig eine Aktivierungstaste vorgesehen, deren Benutzung von dem erfindungsgemäßen Verfahren ebenso erfasst wird wie die Benutzung eines Fahrzeugschlüssels zum Aktivieren des Infotainmentsystems. Gleiches gilt - sofern vorhanden - für die Benutzung einer Motorstarttaste.

Eine weitere Schonung der Ladung des Energiespeichers und somit Verbesserung einer Verfügbarkeit der vollständigen Funktionsfähigkeit des Infotainmentsystems kann erreicht werden, wenn das Infotainmentsystem in Abhängigkeit einer Entfernung eines oder mehrerer Fahrzeugnutzer vom Fahrzeug in den zweiten Energiesparzustand versetzt wird. Wenn sich alle potentiellen Fahrzeugnutzer in einer größeren Entfernung zum Fahrzeug befinden, beispielsweise in einer Entfernung von mehr als 50 m kann nicht mit einem schnellen Besteigen des Fahrzeugs durch den Fahrzeugnutzer gerechnet werden. Folglich kann das Infotainmentsystem zur Schonung der Ladung im Energiespeicher solange im Tiefschlaf gehalten werden, wie sich alle potentiellen Fahrzeugnutzer mehr als 50 m vom Fahrzeug entfernt befinden. Die aktuelle Entfernung jedes Fahrzeugnutzers zum Fahrzeug kann beispielsweise mittels einer dafür vorgesehenen Smartphone-App überwacht werden. Die Smartphone-App kann bei Unterschreiten einer vorgegebenen Mindestentfernung, von beispielsweise 50 m (beispielsweise über ein Mobilfunknetz) ein Signal an das Fahrzeug senden, um das Infotainmentsystem aus dem zweiten Energiesparzustand aufzuwecken.

Die im Zusammenhang mit dem erfindungsgemäßen Verfahren beschriebenen Vorteile und Weiterbildungen können in gleicher Weise auf das erfindungsgemäße Fahrzeug übertragen werden.

Die vorliegende Erfindung wird nun anhand der beigefügten Zeichnungen näher erläutert. Dabei zeigen:
- Fig. 1: eine schematische Darstellung einer Anordnung eines Infotainmentsystems in einem Fahrzeug;
- Fig. 2: einen schematischen Ablaufplan des erfindungsgemäßen Verfahrens;
- Fig. 3: eine schematische Darstellung einer Zähltabelle zum Zählen von zeitraumspezifischen Inbetriebnahmevorgängen;
- Fig. 4: ein erstes schematisches Beispiel eines Bereitschafts- und Inbetriebnahmeablaufs; und
- Fig. 5: ein zweites schematisches Beispiel eines Bereitschafts- und Inbetriebnahmeablaufs.

Die nachfolgend näher beschriebenen Ausführungsbeispiele stellen bevorzugte Ausführungsformen der vorliegenden Erfindung dar.

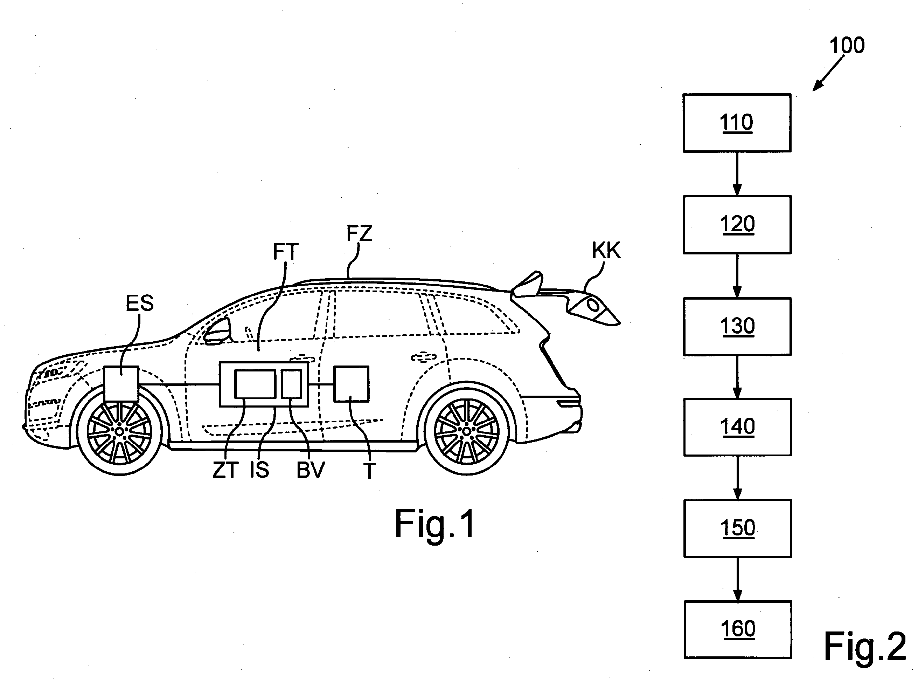

Die Fig. 1 zeigt eine Anordnung eines Fahrzeugs FZ mit einem Energiespeicher ES, einem Timer T (Echtzeituhr) und einem Infotainmentsystem IS, das mit elektrischer Energie aus dem Energiespeicher ES betrieben werden.

Das in Fig. 2 gezeigte Verfahren 100 zum Betreiben eines Infotainmentsystems IS weist folgende Schritte auf. In einem ersten Schritt 110 wird das Infotainmentsystems IS in einem Vollbetriebszustand VZ (ersten Betriebszustand) betrieben. In einem zweiten Schritt 120 wird das Infotainmentsystem IS in einem Suspend-to-RAM-Zustand SZ (ersten Energiesparzustand) betrieben. In einem dritten Schritt 130 wird ein Timer T zum Aufwecken einer Betriebszustandsverwaltung BV des Infotainmentsystems IS zu einer Aufweckzeit TA gestellt. In einem vierten Schritt 140 wird das Infotainmentsystem IS in einen Tiefschlafzustand TZ (zweiten Energiesparzustand) versetzt. In einem fünften Schritt 150 wird die Betriebszustandsverwaltung BV des Infotainmentsystems IS mittels des Timers T zu einer Aufweckzeit TA geweckt. In einem sechsten Schritt 160 wird das Infotainmentsystems IS in dem Suspend-to-RAM-Zustand SZ (ersten Energiesparzustand) betrieben. Der dritte Schritt 130 kann auch vor dem zweiten 120 oder sogar vor dem ersten 110 Schritt stattfinden.

Eine vorteilhafte Option sieht vor, dass die Betriebszustandsverwaltung BV nach dem Aufwecken (Schritt 150) und vor dem Versetzen (Schritt 160) des Infotainmentsystems IS in den ersten Energiesparzustand einen oder mehrere Aktualisierungsvorgänge durchführt und/oder veranlasst (beispielsweise Abrufen von Daten über Funk, Überprüfen und/oder Nachjustieren von Fahrzeugzuständen).

Eine bevorzugte Ausführungsform sieht vor, dass das Infotainmentsystem IS dazu vorbereitet ist, die Aufweckzeit TA anhand eines Nutzungsverhaltens zu ermitteln (zu erlernen), das vor dem ersten Betreiben 110 stattgefunden hat. Hierzu wird in einem vorausgehenden Zeitraum (beispielsweise über mehrere Tage oder Wochen hinweg) ermittelt, wie viele Inbetriebnahmevorgänge in welchen Zeiträumen stattfinden. Die zeitliche Auflösung kann beispielsweise ein Stunde, eine halbe Stunde, eine Viertelstunde oder sogar zehn Minuten betragen. Eine besonders bevorzugte Ausführungsform sieht vor, dass die Erfassung der Anzahlen der zeitraumspezifischen Inbetriebnahmevorgänge wochentagsspezifisch erfolgt. Dies ist für die vielen Fahrzeugnutzer von Vorteil, die beispielsweise aufgrund einer Teilzeittätigkeit oder aus anderen Gründen wochentagsspezifische Tagesabläufe pflegen. Grundsätzlich wäre es aber auch möglich, beim Zählen der Inbetriebnahmevorgänge nur zwischen Werktagen (mit oder ohne Samstagen) und arbeitsfreien Tagen (ohne oder mit Samstagen) zu unterscheiden.

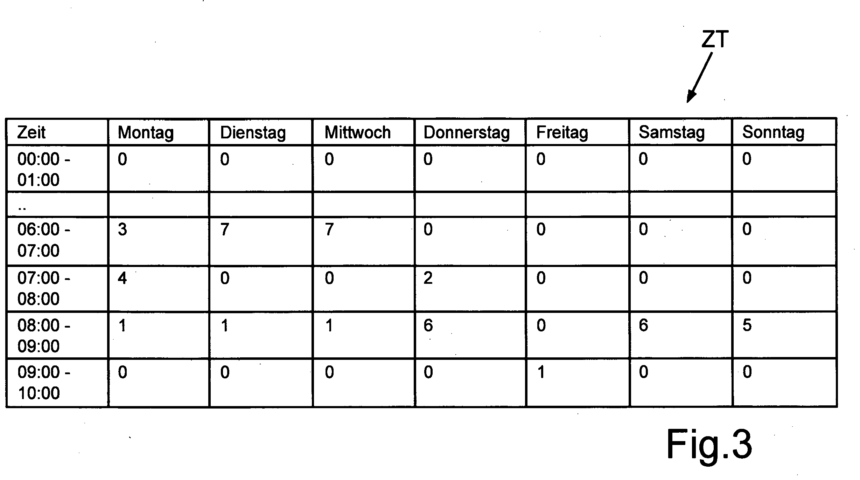

Die Fig. 3 zeigt eine Zähltabelle ZT zum Erfassen von Zähldaten von zeitraumspezifischen Inbetriebnahmevorgängen. Hierin werden die Anzahlen der zeitraumspezifischen Inbetriebnahmevorgänge des Fahrzeugs FZ oder des Infotainmentsystems IS in einem 7 x 24 h-Raster durchgeführt und in der Zähltabelle ZT gezählt.

Es zweckmäßig, eine Funktion (Relaxationsfunktion) vorzusehen, die dafür sorgt, dass zeitlich weiter zurückliegende Inbetriebnahmeereignisse in einem nachfolgenden Auswerten der Zähltabelle ZT eine geringere Auswirkung auf das Auswertungsergebnis haben, als zeitlich kürzer zurückliegende Inbetriebnahmeereignisse. Dies kann beispielsweise dadurch vorbereitet werden, dass in der Zähltabelle ZT mit jedem Inbetriebnahmeereignis auch ein in den Figuren nicht dargestellter Erfassungszeitpunkt mit abgespeichert wird. Eine alternative Möglichkeit besteht darin, jeden Eintrag in der Zähltabelle ZT regelmäßig (beispielsweise alle vier oder acht Wochen) um einen festen Betrag (beispielsweise um Eins) oder einen prozentualen Betrag (beispielsweise 10 % des jeweiligen zeitraumspezifischen Eintrags) zu verringern. So können Inbetriebnahmevoränge rollierend über einen aktuell zurückliegenden Zeitraum erfasst werden.

Das Infotainmentsystem IS wertet die in Fig. 3 gezeigte Zähltabelle ZT aus und erkennt dabei, dass es am Montag eine Inbetriebnahmehäufung zwischen 6:00 und 9:00 gibt. Davon ausgehend würde ein Aufwecken des Infotainmentsystems IS um 5:30 Uhr veranlasst werden, um es dann bis 8:30 im zweiten Suspend-to-RAM-Zustand SZ zu belassen. Am Dienstag würde ein Aufwecken des Infotainmentsystems IS um 5:00 Uhr veranlasst werden, um es dann bis 8:00 im zweiten Suspend-to-RAM-Zustand SZ zu belassen.

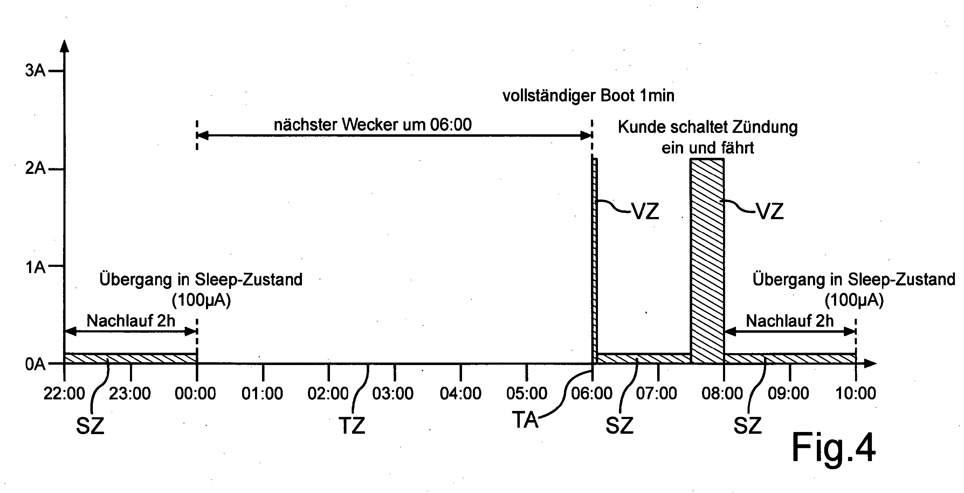

Die Fig. 4 zeigt folgendes Beispiel. An jedem Montag findet eine Inbetriebnahme des Fahrzeugs FZ um 7:00 Uhr statt. Der aktuelle Zeitpunkt ist Sonntag 22:00 Uhr. Ein Timer T (Echtzeituhr) wird auf 6:00 Uhr (7:00 minus 1 h) programmiert. Um 6:00 Uhr fährt das Infotainmentsystem IS hoch und überführt es dann einen zweiten Suspend-to-RAM-Zustand SZ. Wenn der Fahrzeugnutzer das Fahrzeug FZ um 7:30 Uhr in Betrieb nimmt, muss es das Infotainmentsystem IS nur noch von dem zweiten Suspend-to-RAM-Zustand SZ in den Vollbetriebszustand VZ überführen. Dieser Vorgang benötigt (wie eingangs erwähnt) dann beispielsweise nur etwa 4 s.

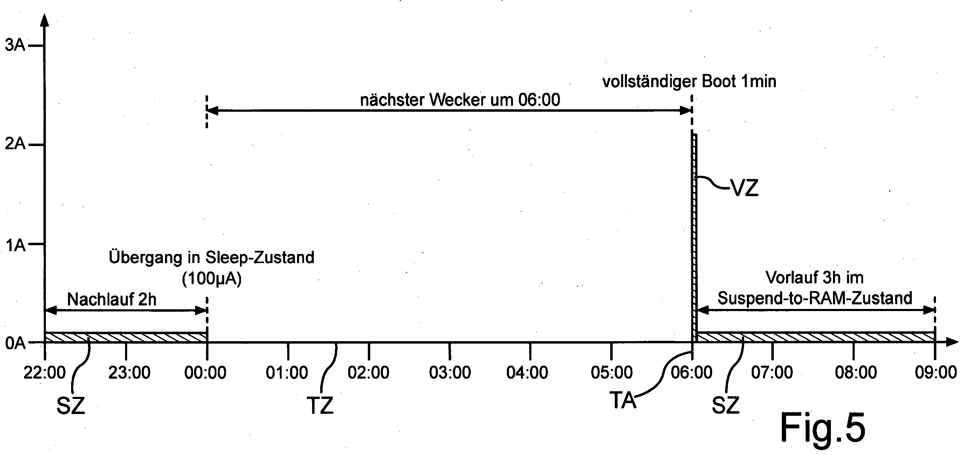

Die Fig. 5 zeigt dasselbe Beispiel für den Fall, dass innerhalb des zweiten Suspend-to-RAM-Zustands SZ (der zweiten Betriebsphase mit dem ersten Energiesparzustand) kein Fahrzeugnutzer das Fahrzeug FZ in Betrieb nimmt. In diesem Fall überführt sich das Infotainmentsystem IS um 9:00 Uhr (also 3 h nach der Weckzeit) mittels des Timers T (Echtzeituhr) in den Tiefschlafzustand TZ.

Die mittlere Wartezeit auf volle Funktionsfähigkeit des Infotainmentsystems IS kann aus Sicht des Fahrzeugnutzers zusätzlich verkürzt werden, wenn mit der Überführung des Infotainmentsystems IS aus dem Suspend-to-RAM-Zustand SZ (ersten Energiesparzustand) in den Vollbetriebszustand VZ (ersten Betriebszustand) bereits begonnen wird, wenn von einem Fahrzeug FZ, in dem das Infotainmentsystem IS angeordnet ist, eine Fahrzeugtür FT oder Kofferraumklappe KK geöffnet wird.

Mittels Aufteilung der maximal möglichen Nachlaufzeit auf eine erste Betriebsphase 120 (verkürzte Nachlaufzeit) im Suspend-to-RAM-Zustand SZ (ersten Energiesparzustand) und eine zweite Betriebsphase 160 im Suspend-to-RAM-Zustand SZ (ersten Energiesparzustand) wird für den Fahrzeugnutzer eine Wahrscheinlichkeit für schnelle vollständige Verfügbarkeit des Infotainmentsystem IS erhöht, also eine mittlere Wartezeit auf eine schnelle vollständige Verfügbarkeit des Infotainmentsystem IS verkleinert. Durch die im Mittel schnellere Verfügbarkeit des Infotainmentsystems IS und damit verbundene Verkürzung der Wartezeit wird ein Nutzerkomfort verbessert, ohne dass dafür im Fahrzeug FZ ein größerer Energiespeicher EX (Fahrzeugbatterie) einbaut werden muss (welches in der Regel erhebliche Gewichts- und Kostennachteile nach sich zieht). Die Dauer der ersten Betriebsphase 120 (verkürzten Nachlaufzeit) im Suspend-to-RAM-Zustand SZ kann beispielsweise 2 Stunden betragen und die Dauer der zweiten Betriebsphase 160 im Suspend-to-RAM-Zustand SZ kann beispielsweise 3 bis 4 Stunden betragen.

## Patentansprüche

1. Verfahren (100) zum Betreiben eines Infotainmentsystems (IS), wobei das Verfahren (100) folgende Schritte aufweist:
- Betreiben (110) des Infotainmentsystems (IS) in einem ersten Betriebszustand (VZ);
- erstes Betreiben (120) des Infotainmentsystems (IS) in einem ersten Energiesparzustand (SZ), in dem eine mittlere Leistungsaufnahme (LA) des Infotainmentsystems (IS) niedriger ist als in dem ersten Betriebszustand (SZ);
**gekennzeichnet durch** die Schritte:
- Stellen (130) eines Timers (T) zum Aufwecken einer Betriebszustandsverwaltung (BV) des Infotainmentsystems (IS) zu einer Aufweckzeit (TA);
- Versetzen (140) des Infotainmentsystems (IS) in einen zweiten Energiesparzustand (TZ), in dem eine mittlere Leistungsaufnahme (LA) des Infotainmentsystems (IS) niedriger ist als in dem ersten Energiesparzustand (SZ);
- zur Aufweckzeit (TA) Aufwecken (150) der Betriebszustandsverwaltung (BV) des Infotainmentsystems (IS) mittels des Timers (T);
- zweites Betreiben (160) des Infotainmentsystems (IS) in dem ersten Energiesparzustand (SZ).

2. Verfahren (100) nach dem vorhergehenden Anspruch, **dadurch gekennzeichnet, dass** die Aufweckzeit (TA) unter Berücksichtigung eines Nutzungsverhaltens ermittelt wird, das vor dem ersten Betreiben (110) stattgefunden hat.

3. Verfahren (100) nach einem der vorhergehenden Ansprüche, **dadurch gekennzeichnet, dass** die Aufweckzeit (TA) unter Berücksichtigung eines Eintrags erfolgt, der in einem elektronischen Kalender eines Fahrzeugnutzers oder des Fahrzeugs (FZ) enthalten ist.

4. Verfahren (100) nach einem der vorhergehenden Ansprüche, **dadurch gekennzeichnet, dass** eine Nachlaufzeit des ersten Betreibens (120) des Infotainmentsystems (IS) im ersten Energiesparzustand (SZ) unter Berücksichtigung einer Restladung eines elektrischen Energiespeichers (ES) ermittelt wird.

5. Verfahren (100) nach dem vorhergehenden Anspruch, **dadurch gekennzeichnet, dass** eine maximale Zeitdauer des zweiten Betreibens (160) des Infotainmentsystems (IS) im ersten Energiesparzustand (SZ) unter Berücksichtigung einer Restladung eines elektrischen Energiespeichers (ES) ermittelt wird.

6. Verfahren (100) nach dem vorhergehenden Anspruch, **dadurch gekennzeichnet, dass** das Infotainmentsystem (IS) aus dem ersten Energiesparzustand (SZ) in den ersten Betriebszustand (VZ) versetzt wird, wenn von einem Fahrzeug (FZ), in dem das Infotainmentsystem angeordnet ist, eine Fahrzeugtür (FT) oder Kofferraumklappe (KK) geöffnet wird.

7. Verfahren (100) nach einem der vorhergehenden Ansprüche, **dadurch gekennzeichnet, dass** das Infotainmentsystem (IS) in Abhängigkeit einer Entfernung eines oder mehrerer Fahrzeugnutzer vom Fahrzeug (FZ) in den zweiten Energiesparzustand (TZ) versetzt wird.

8. Verfahren (100) nach einem der vorhergehenden Ansprüche, **dadurch gekennzeichnet, dass** der erste Betriebszustand (VZ) ein Vollbetriebszustand (VZ) ist und/oder dass der erste Energiesparzustand (SZ) ein Suspend-to-RAM-Zustand ist und/oder dass der zweite Energiesparzustand (TZ) ein Tiefschlafzustand ist.

9. Infotainmentsystem (IS)
**dadurch gekennzeichnet, dass**
das Infotainmentsystem (IS) dazu vorbereitet ist, gemäß dem Verfahren (100) nach einem der Ansprüche 1 bis 8 betrieben zu werden.

10. Fahrzeug (FZ),
**dadurch gekennzeichnet, dass**
das Fahrzeug (FZ) ein Infotainmentsystem (IS) nach Anspruch 9 aufweist und/oder dass das Fahrzeug (FZ) dazu vorbereitet ist, ein Infotainmentsystem (IS) gemäß dem Verfahren (100) nach einem der Ansprüche 1 bis 8 zu betreiben.

## Claims

1. Method (100) for operating an infotainment system (IS), the method (100) comprising the following steps:
- operating (110) the infotainment system (IS) in a first operating state (VZ);
- first operating (120) of the infotainment system (IS) in a first energy-saving state (SZ) in which an average power consumption (LA) of the infotainment system (IS) is lower than in the first operating state (SZ);
**characterised by** the steps:
- setting (130) a timer (T) for waking up an operating state management (BV) of the infotainment system (IS) at a wake-up time (TA);
- transitioning (140) the infotainment system (IS) into a second energy-saving state (TZ) in which an average power consumption (LA) of the infotainment system (IS) is lower than in the first energy-saving state (SZ);
- waking up (150) the operating state management (BV) of the infotainment system (IS) at the wake-up time (TA) by means of the timer (T);
- second operating (160) of the infotainment system (IS) in the first energy-saving state (SZ).

2. Method (100) according to the preceding claim, **characterised in that** the wake-up time (TA) is determined taking into account a usage behaviour that has occurred before the first operating (110).

3. Method (100) according to any of the preceding claims, **characterised in that** the wake-up time (TA) occurs taking into account an entry that is contained in an electronic calendar of a vehicle user or of the vehicle (FZ).

4. Method (100) according to any of the preceding claims, **characterised in that** a lag time of the first operating (120) of the infotainment system (IS) in the first energy-saving state (SZ) is determined taking into account a residual charge of an electric energy storage device (ES).

5. Method (100) according to the preceding claim, **characterised in that** a maximum time period of the second operating (160) of the infotainment system (IS) in the first energy-saving state (SZ) is determined taking into account a residual charge of an electric energy storage device (ES).

6. Method (100) according to the preceding claim, **characterised in that** the infotainment system (IS) is transitioned from the first energy-saving state (SZ) into the first operating state (VZ) when a vehicle door (FT) or boot lid (KKK) of a vehicle (FZ) in which the infotainment system (IS) is arranged is opened.

7. Method (100) according to any of the preceding claims, **characterised in that** the infotainment system (IS) is transitioned into the second energy-saving state (TZ) as a function of a distance of one or more vehicle users from the vehicle (FZ).

8. Method (100) according to any of the preceding claims, **characterised in that** the first operating state (VZ) is a full operating state (VZ) and/or the first energy-saving state (SZ) is a suspend-to-RAM state and/or the second energy-saving state (TZ) is a deep-sleep state.

9. Infotainment system (IS)
**characterised in that**
the infotainment system (IS) is prepared to be operated in accordance with the method (100) according to any of claims 1 to 8.

10. Vehicle (FZ),
**characterised in that**
the vehicle (FZ) has an infotainment system (IS) according to claim 9 and/or the vehicle (FZ) is prepared to operate an infotainment system (IS) in accordance with the method (100) according to any of claims 1 to 8.

## Revendications

1. Procédé (100) pour le fonctionnement d'un système d'info-divertissement (IS), dans lequel le procédé (100) présente les étapes suivantes :
- fonctionnement (110) du système d'info-divertissement (IS) dans un premier état de fonctionnement (VZ) ;
- premier fonctionnement (120) du système d'info-divertissement (IS) dans un premier état d'économie d'énergie (SZ), dans lequel une puissance absorbée moyenne (LA) du système d'info-divertissement (IS) est plus faible que dans le premier état de fonctionnement (SZ) ;
**caractérisé par** les étapes :
- réglage (130) d'un temporisateur (T) pour le réveil d'une gestion d'état de fonctionnement (BV) du système d'info-divertissement (IS) à une heure de réveil (TA) ;
- amenée (140) du système d'info-divertissement (IS) dans un second état d'économie d'énergie (TZ), dans lequel une puissance absorbée moyenne (LA) du système d'info-divertissement (IS) est plus faible que dans le premier état d'économie d'énergie (SZ) ;
- pour l'heure de réveil (TA), réveil (150) de la gestion d'état de fonctionnement (BV) du système d'info-divertissement (IS) au moyen du temporisateur (T) ;
- second fonctionnement (160) du système d'info-divertissement (IS) dans le premier état d'économie d'énergie (SZ).

2. Procédé (100) selon la revendication précédente, **caractérisé en ce que** l'heure de réveil (TA) est déterminée en tenant compte d'un comportement d'utilisation qui a eu lieu avant le premier fonctionnement (110).

3. Procédé (100) selon l'une quelconque des revendications précédentes, **caractérisé en ce que** l'heure de réveil (TA) est effectuée en tenant compte d'une entrée qui est contenue dans un calendrier électronique d'un utilisateur de véhicule ou du véhicule (FZ).

4. Procédé (100) selon l'une quelconque des revendications précédentes, **caractérisé en ce que** la durée de poursuite du premier fonctionnement (120) du système d'info-divertissement (IS) est déterminée dans le premier état d'économie d'énergie (SZ) en tenant compte d'une charge résiduelle d'un accumulateur d'énergie électrique (ES).

5. Procédé (100) selon la revendication précédente, **caractérisé en ce qu'**une durée maximale du second fonctionnement (160) du système d'info-divertissement (IS) est déterminée dans le premier état d'économie d'énergie (SZ) en tenant compte d'une charge résiduelle d'un accumulateur d'énergie électrique (ES).

6. Procédé (100) selon la revendication précédente, **caractérisé en ce que** le système d'info-divertissement (IS) est amené du premier état d'économie d'énergie (SZ) au premier état de fonctionnement (VZ), lorsque d'un véhicule (FZ), dans lequel le système d'info-divertissement est agencé, une porte de véhicule (FT) ou un hayon de coffre (KK) est ouvert.

7. Procédé (100) selon l'une quelconque des revendications précédentes, **caractérisé en ce que** le système d'info-divertissement (IS) est amené en fonction d'un éloignement d'un ou de plusieurs utilisateurs de véhicule du véhicule (FZ) dans le second état d'économie d'énergie (TZ).

8. Procédé (100) selon l'une quelconque des revendications précédentes, **caractérisé en ce que** le premier état de fonctionnement (VZ) est un état de fonctionnement intégral (VZ) et/ou **en ce que** le premier état d'économie d'énergie (SZ) est un état Suspend-to-RAM et/ou **en ce que** le second état d'économie d'énergie (TZ) est un état de veille prolongée.

9. Système d'info-divertissement (IS),
**caractérisé en ce que**
le système d'info-divertissement (IS) est préparé afin d'être mis en fonctionnement selon le procédé (100) selon l'une quelconque des revendications 1 à 8.

10. Véhicule (FZ),
**caractérisé en ce que**
le véhicule (FZ) présente un système d'info-divertissement (IS) selon la revendication 9 et/ou **en ce que** le véhicule (FZ) est préparé afin de faire fonctionner un système d'info-divertissement (IS) selon le procédé (100) selon l'une quelconque des revendications 1 à 8.
